# EUROPÄISCHE PATENTSCHRIFT

(11) **EP 0 881 367 B1**
(45) Veröffentlichungstag und Bekanntmachung des Hinweises auf die Patenterteilung: **16.10.2002**
(21) Anmeldenummer: 98108980.8
(22) Anmeldetag: 18.05.1998
(51) Int. Cl.: F01N 3/20, F01N 9/00

(54) **Katalysatorsystem zur Entstickung von Abgasen bei Dieselbrennkraftmaschinen**
Catalytic system for removing NOx from diesel engine exhaust gas
Système catalytique pour l'élimination de NOx de gaz d'échappement de moteurs diesel

(30) Priorität: 30.05.1997 DE 19722497
(43) Veröffentlichungstag der Anmeldung: 02.12.1998
(73) Patentinhaber: Volkswagen Aktiengesellschaft, 38436 Wolfsburg (DE)
(72) Erfinder: Engeler, Werner, 38527 Meine (DE); Düsterdiek, Thorsten, Dr., 30449 Hannover (DE)
(74) Vertreter: Meyer, Enno, Dr.

(56) Entgegenhaltungen:
- EP-A- 0 758 713
- WO-A-97/13058
- DE-C- 4 334 071
- US-A- 5 179 833
- PATENT ABSTRACTS OF JAPAN vol. 015, no. 329 (M-1149), 21. August 1991 & JP 03 124909 A (MITSUBISHI MOTORS CORP), 28. Mai 1991

## Beschreibung

Die Erfindung betrifft ein Katalysatorsystem zur Entstickung von Abgasen bei Dieselbrennkraftmaschinen nach dem Oberbegriff des Anspruchs 1.

Brennkraftmaschinen erzeugen in ihrem Abgas Schadstoffe, u.a. Kohlenmonoxid, Stickoxide (NO_{X}) sowie unverbrannte oder teilverbrannte Kohlenwasserstoffe (HC), die zu einer Luftverunreinigung führen. Um solche Luftverunreinigungen zu reduzieren, ist es allgemein bekannt, die Abgase durch den Einsatz von Katalysatoren von solchen Schadstoffen weitgehend zu befreien. Dazu werden die Abgase durch den Katalysator geleitet, wo die Schadstoffe weitgehend in unschädliche Verbindungen, wie z. B. in Kohlendioxid sowie Stickstoff und Wasser, überführt werden.

Die Lebensdauer von Katalysatoren ist begrenzt. Ihre katalytische Aktivität und damit die Konvertierungsrate für Schadstoffe läßt nach einer gewissen Zeit mehr oder weniger rasch nach, so daß dann die Abgase ungereinigt in die Atmosphäre gelangen. Da Belange des Umweltschutzes und entsprechende gesetzliche Abgasvorschriften jedoch während des gesamten Betriebseinsatzes einer Brennkraftmaschine erfüllt sein müssen, ist dann ein Austausch des Katalysators erforderlich. Um dies zu erkennen, sind bereits Vorrichtungen und Verfahren zur Funktionsüberwachung von Katalysatoren bekannt:

Eine Möglichkeit der direkten Überwachung eines Katalysators (DE 26 43 739 C2) besteht in der Messung des Abbaus einer oder mehrerer Schadstoffkomponenten, wobei die Konzentration derselben sowohl vor als auch nach dem Katalysator mit einem geeigneten Sensor gemessen wird. Der Konzentrationsunterschied ist dabei ein Maß für den Konvertierungsgrad und damit für die Funktionsfähigkeit des Katalysators. Eine solche direkte Messung von Schadstoffanteilen erfordert in aufwendiger Weise jeweils einen geeigneten Sensor vor und nach dem Katalysator.

In einer weiter bekannten Überwachung (DE 26 43 739 C2) wird über eine Temperaturvergleichsmessung mit Hilfe zweier Temperaturfühler die durch eine am Katalysator ablaufende Reaktion entstehende Wärmetönung gemessen. Ein Temperaturfühler ist dazu vor dem Katalysator und der andere innerhalb des Katalysators angeordnet. Die Höhe der gemessenen Temperaturdifferenz ist dabei ein Maß für die Funktionsfähigkeit des Katalysators. Dem liegt die Erkenntnis zugrunde, daß an einem funktionsfähigen Katalysator Kohlenmonoxide sowie unverbrannte Kohlenwasserstoffe zu Kohlendioxid und Wasser umgesetzt werden. Dabei handelt es sich um exotherme Reaktionen, die mit einer Temperaturerhöhung innerhalb des Systems verbunden sind. Diese Reaktionen und die damit verbundene Temperaturerhöhung treten aber nur auf, wenn und solange der Katalysator einwandfrei funktionsfähig ist.

Eine ähnliche Funktionsüberwachung von Katalysatoren (DE 40 27 207 A1) umfaßt ebenfalls mindestens zwei Temperaturfühler, die insbesondere vor und nach einem Katalysator angeordnet sind. Auch hier wird aus einer ermittelten Temperaturdifferenz auf eine geeignete Funktion des Katalysators geschlossen. Bei der Auswertung werden zugleich eine Mehrzahl von Motor- und Betriebsparametem berücksichtigt.

In einer nach dem gleichen Prinzip arbeitenden Funktionsüberwachung für einen Katalysator (DE 37 10 268 A1) werden als Temperaturfühler Thermoelemente vorgeschlagen.

In einer weiter bekannten Funktionsüberwachung eines Katalysators durch eine Temperaturdifferenzmessung (EP 0 442 648 A3) wird für eine Auswertung und Aussage über die Katalysatortunktion der Wert der Temperaturdifferenz mit dem Wert einer Durchflußrate des Abgases multipliziert und dieses Ergebnis integriert.

Zudem ist eine Diagnoseeinrichtung für ein Katalysatorsystem bekannt (DE 44 12 191 A1), bei dem jeweils ein Kraftstoff-Luft-Verhältnis-Sensor vor und hinter einem Katalysator angeordnet ist und durch Auswertung deren unterschiedlicher Signalwerte auf die Funktion des Katalysators geschlossen wird.

Bei einem weiter bekannten Überwachungsverfahren für die Konvertierungsrate eines Katalysators einer Brennkraftmaschine ist stromab des Katalysators ein Kohlenwasserstoffsensor (HC-Sensor) eingesetzt. Damit wird die HC-Emission während eines bestimmten Zeitfensters nach einem Kaltstart aufsummiert. Diesem Verfahren liegt die Erkenntnis zugrunde, daß sich ein brauchbarer Katalysator von einem unbrauchbaren Katalysator nach einem Kaltstart während eines solchen Zeitfensters dadurch unterscheidet, daß der bessere Katalysator während der Dauer des Zeitfensters eine geringere aufsummierte Menge Kohlenwasserstoffe emittiert als ein schlechterer Katalysator. Die sich ergebenden Summenwerte werden jeweils mit einem vorgegebenen Grenzwert verglichen. Eine solche Überprüfung erfolgt somit jeweils nur nach einem Kaltstart durch Aufsummierung über ein Zeitfenster. Eine kontinuierliche Betriebsüberwachung ist mit dieser Maßnahme nicht möglich.

Weiter ist eine Überwachung des Anspringverhaltens eines Katalysators durch Zudosierung eines Luft-Kraftstoff-Gemisches zum Katalysatorsystem während statischer Betriebsbedingungen bekannt (DE 43 30 997 A1). Die Auswertung der Reaktion auf eine solche Zudosierung erfolgt über einen oder zwei Temperaturfühler. Diese Überwachung wird hier auch für eine On-Board-Diagnose vorgeschlagen. Die hier verwendete Zudosierung ist eine Maßnahme für die Überwachung und nicht für die Katalysatorfunktion an sich.

Bei ähnlichen, gattungsgemäßen Anordnungen und Verfahren zur Überwachung des Konvertierungsgrades von Katalysatoren (DE 41 00 397 A1; US-PS 5 133 184) soll eine Kraftstoffzudosierung während Schubphasen erfolgen. Damit sollen unkalkulierbare Abhängigkeiten bei der Katalysatorbeurteilung reduziert werden. Die Zudosierung wird hier sowohl über gesteuerte Zündaussetzer als auch über separate gesteuerte Düsen vorgeschlagen. Die Auswertung der Reaktion der Zudosierung wird über je einen Temperaturfühler vor und nach dem Katalysator als Differenztemperatur erfaßt, die der Beurteilung der Katalysatorfunktion zugrundegelegt wird.

Für aufwendige, große, stationäre Brennkraftmaschinen ist ein Verfahren zur Verminderung der Stickoxidkonzentration im Abgas bekannt (DE 43 34 071 C1), bei dem dem Abgas ein ammoniakhaltiges Reduktionsmittel zugesetzt wird. Dadurch werden Stickoxide in einem vom Abgas durchströmten Katalysator verstärkt zu Stickstoff und Wasser umgesetzt. Dazu ist eine aufwendige Zudosiereinrichtung mit Tankbehältern für das Reduktionsmittel erforderlich. Eine solche Anordnung ist insbesondere für eine Brennkraftmaschine in einem Kraftfahrzeug aus Kosten- und Platzgründen nicht praktikabel.

Alle vorstehend erläuterten Katalysatorüberwachungen mit zwei Temperaturfühlern haben den Nachteil, daß zur Überwachung eine von den Schadstoffkonzentrationen nur indirekt abhängige Funktion als Temperaturdifferenz ausgewertet wird und dadurch gegenüber einer direkten Konzentrationsmessung verstärkt Unsicherheiten und Fehlinterpretationen möglich sind. Zur Erfassung einer Temperaturdifferenz sind in aufwendiger Weise wenigstens zwei Temperaturfühler erforderlich. Zudem wird im vorstehenden Stand der Technik keine Unterscheidung zwischen einem Katalysatorsystem einer selbstzündenden Brennkraftmaschine (Diesel-Brennkraftmaschine) und einer fremdgezündeten Brennkraftmaschine (Otto-Brennkraftmaschine) getroffen, obwohl hier wesentliche Unterschiede vorliegen:

Da das Dieselabgas eine oxidierende Atmosphäre darstellt, ist die Reduzierung von Stickoxiden mit herkömmlichen Oxidationskatalysatoren aus unterschiedlichen Gründen nur begrenzt möglich. Der an sich mögliche Einsatz von edelmetallfreien Zeolithkatalysatoren, deren Arbeitsbereich bezüglich NO_{X} oberhalb von ca. 400°C liegt, ist bisher nicht praktikabel, weil die Abgastemperaturen, beispielsweise von herkömmlichen Turbodieselmotoren, üblicherweise nur bei maximal ca. 300°C liegen und die Zeolithkatalysatoren Probleme hinsichtlich ihrer Temperaturbeständigkeit aufweisen.

Bekannt ist in Verbindung mit einer Dieselbrennkraftmaschine ein DeNO_{X}-Katalysatorsystem mit einem platinhaltigen Katalysator und einer Zudosierung von Dieselkraftstoff als Reduktionsmittel. Das Arbeitsfenster eines solchen Katalysators liegt bezüglich NO_{X} zwischen ca. 180° und 300°. Die Zudosierung des Dieselkraftstoffs vor dem Katalysator erfolgt gesteuert in Abhängigkeit der Abgastemperatur der Drehzahl und der Last.

Eine Überwachung der Katalysatorfunktion ist auch hier in der eingangs dargestellten Weise mit zwei Temperaturfühlern durchgeführt, wobei eine gemessene Ist-Temperaturdifferenz im Vergleich zu einer im Steuergerät in Form eines Kennfeldes abgelegten Soll-Temperaturdifferenz Aufschluß über eine Katalysatorfehlfunktion gibt. Neben der relativ aufwendigen Anordnung einer solchen Überwachung sind auch die Überwachungsergebnisse teilweise unsicher, da es beispielsweise im dynamischen Fahrbetrieb zum Überschwingen der Temperatur vor dem Katalysator kommen kann, was zu Fehlinterpretationen über die Katalysatorfunktion führt. Um Alarmmeldungen einer tatsächlich nicht vorhandenen Fehlfunktion des Katalysators zu vermeiden, wurde im eingangs genannten Stand der Technik teilweise vorgeschlagen, die Überwachung auf bestimmte Betriebsphasen und Temperaturbereiche, beispielsweise nur bei stationärem Betrieb oder nur nach einem Kaltstart, einzuschränken. Eine kontinuierliche Überwachung während des gesamten Betriebs ist aber dann nicht mehr möglich.

Ferner ist ein gattungsgemäßes Katalysatorsystem gemäß dem Oberbegriff des Patentanspruchs 1 in den Druckschriften JP 03 124 909 und GB-A-2 320 581 beschrieben.

Der Erfindung liegt daher die Aufgabe zugrunde, die Effizienz der Zudosierung von Dieselbrennkraftstoff und der Regelung eines gattungsgemäßes Katalysatorsystem zu verbessern.

Die Aufgabe wird durch die Merkmale des Katalysatorsystems nach Anspruch 1 gelöst. Bevorzugte Ausführungsformen der Erfindung sind Gegenstand der Unteransprüche.

Anhand einer Zeichnung wird ein Ausführungsbeispiel der Erfindung näher erläutert.

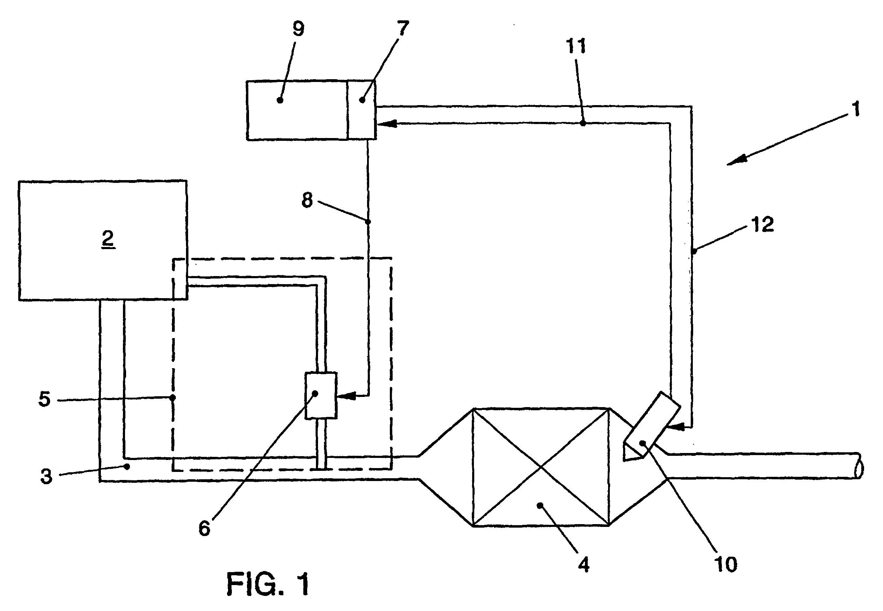

In der einzigen Figur ist schematisch ein DeNOx-Katalysatorsystem einer Dieselbrennkraftmaschine 2 dargestellt, in derem Abgasstrang 3 ein platinhaltiger DeNOₓ-Katalysator 4 liegt. Vor dem DeNOx-Katalysator 4 wird mit Hilfe einer Kraftstoffzudosiervorrichtung (5), die im wesentlichen ein steuerbares Dosierventil 6 umfaßt, Dieselkraftstoff eingedüst. Die Kraftstoffzudosiervorrichtung 5 bzw. das Dosierventil 6 werden vom Ausgang eines Dosierreglers 7 über eine Leitung 8 gesteuert, wobei der Dosierregler 7 integraler Bestandteil einer elektronischen Motorsteuereinheit 9 ist.

Im Dosierregler 7 ist ein Regelalgorithmus für die Zudosierung abgelegt, wobei Parameter, die in der Motorsteuereinheit ohnehin zur Verfügung stehen, wie Temperaturen, Drehzahl, Last, etc., als regelungstechnische Störgrößen dem Regelalgorithmus aufgeschaltet sind.

Stromab unmittelbar nach dem DeNOx-Katalysator 4 ist ein HC-Sensor 10 im Abgasstrang 3 angeordnet, der eine HC-Restkonzentration nach dem DeNOx-Katalysator 4 mißt, wobei ein Meßsignal über die Leitung 11 dem Dosierregler 7 als Istwert zugeführt wird. Der HC-Sensor 10, der Dosierregler 7, die Kraftstoffzudosiervorrichtung 5 und der DeNOx-Katalysator 4 bilden einen geschlossenen Regelkreis.

Der HC-Sensor 10 wird auf eine bestimmte Temperatur elektrisch beheizt, wobei die Heizleitungen schematisch als Leitung 12 dargestellt sind. Die Temperaturregelung auf eine bestimmte Temperatur erfolgt im HC-Sensor 10 selbsttätig, wobei beispielsweise bei höherer Temperatur, der Heizwiderstand im HC-Sensor steigt und die Heizleistung damit selbsttätig abnimmt. Die Heizleistung wird als Maß für die jeweilige Katalysatorbetriebstemperatur bzw. Abgastemperatur in der Schaltung des Dosierreglers 7 gemessen und dort ggf. als regelungstechnische Störgröße in die Regelung der Dieselkraftstoffzudosierung einbezogen.

Weiter ist im Bereich des Dosierreglers 7 eine Überwachungsschaltung für den DeNOx-Katalysator 4 integriert. In einem Speicher sind dort entweder ein über den HC-Sensor 10 ermittelter HC-Konvertierungsgrad eines neu eingesetzten DeNOx-Katalysators oder ein entsprechend empirisch ermitteltes Kennfeld abgelegt. Über die Lebensdauer des DeNOx-Katalysators wird ein solcher abgelegter Wert mit dem aktuell gemessenen HC-Konvertierungsgrad verglichen. Bei einer Abweichung, bevorzugt ca. um einen Faktor von 1,5 zwischen dem abgelegten und dem aktuellen Wert, wird über eine (nicht dargestellte) Alarmeinrichtung ein optischer und/oder akustischer ggf. quittierbarer Alarm für eine Fehlfunktion des Katalysators abgegeben.

## Patentansprüche

1. Katalysatorsystem zur Entstickung von Abgasen bei Dieselbrennkraftmaschinen, mit einer Dieselbrennkraftmaschine (2), in dessen Abgasstrang (3) ein Katalysator angeordnet ist, einer Kraftstoff-Zudosiervorrichtung (5), mit der in den Abgasstrang (3) vor dem Katalysator Kraftstoff gesteuert durch eine Dosiersteuereinheit zudosierbar ist, und einem Sensor im Abgasstrang (3) stromab nach dem Katalysator, wobei
der Katalysator bei Gegenwart von Kohlenwasserstoffen ein DeNOx-Katalysator (4) ist,
der Sensor stromab nach dem DeNOx-Katalysator (4) ein Kohlenwasserstoffsensor (10) ist,
der HC-Sensor (10) an die Dosiersteuereinheit als Dosierregler (7) angeschlossen ist, der HC-Sensor (10) als Istwert-Sensor, die Dosiersteuereinheit als Dosierregler (7), die Kraftstoffzudosiervorrichtung (5) als Stellglied und der DeNOx-Katalysator (4) als Regelstrecke einen geschlossenen Regelkreis bilden, und
entsprechend einem abgelegten Regelalgorithmus Dieselkraftstoff als Reduktionsmittel bei betriebswarmen DeNOx-Katalysator (4) zur NOx-Verminderung geregelt in Abhängigkeit der nach dem DeNOx-Katalysator (4) gemessenen HC-Restkonzentration zudosiert wird,
**dadurch gekennzeichnet, daß**
der HC-Sensor (10) elektrisch auf eine bestimmte Temperatur beheizt ist (12) und der Wert der erforderlichen Heizleistung als entsprechender Wert für die Betriebstemperatur des DeNOx-Katalysators (4) und/oder die Abgastemperatur verwendet wird.

2. Katalysatorsystem nach Anspruch 1, **dadurch gekennzeichnet, daß** die Kraftstoff-Zudosiervorrichtung den Kraftstoff nach der Dieselbrennkraftmaschine in den Abgasstrang zudosiert.

3. Katalysatorsystem nach einem der Ansprüche 1 oder 2, **dadurch gekennzeichnet, daß** mit dem HC-Sensor (10) stromab nach dem DeNOx-Katalysator (4) die Kohlenwasserstoffrestkonzentration beim betriebswarmen DeNOx-Katalysator (4) zur Überprüfung der Katalysatorfunktion gemessen wird, wobei die Überprüfung eine Alterungsüberprüfung durch Ermittlung des HC-Konvertierungsgrades umfaßt.

4. Katalysatorsystem nach einem der vorangegangenen Ansprüche, **dadurch gekennzeichnet, daß** die Kraftstoffzudosierung in Abhängigkeit der erfaßten Abgastemperatur und/oder Drehzahl und/oder Last erfolgt.

5. Katalysatorsystem nach einem der vorangegangenen Ansprüche, **dadurch gekennzeichnet, daß** die Diesel-Brennkraftmaschine (2) durch gesteuerte unverbrannte Zylinderfüllung und/oder die Kraftstoff-Zudosiervorrichtung (5) mengenund zeitgesteuert geringe HC-Mengen als im Abgasstrang zudosierter Dieselkraftstoff liefert und deren Abnahme u.a. zur Ermittlung der Betriebstemperatur des DeNOx-Katalysators (4) als Kriterium für das Anspringen des DeNOx-Katalysators (4) mit dem HC-Sensor (10) gemessen wird.

6. Katalysatorsystem nach einem der vorhergehenden Ansprüche, **dadurch gekennzeichnet, daß** der Katalysator bei λ > 1 mindestens ein Stickoxid speichert und bei einer Verringerung des Sauerstoffüberschusses im Abgas mit den Kohlenwasserstoffen reduziert.

7. Katalystorsystem nach einem der Ansprüche 1 bis 5, **dadurch gekennzeichnet, daß** der Katalysator bei gleichzeitiger Gegenwart von Kohlenwasserstoffen und Sauerstoff ein DeNOx-Katalystor ist

8. Katalysatorsystem nach einem der Ansprüche 1 bis 6, **dadurch gekennzeichnet, daß** der Katalysator ein platinhaltiger DeNOx-Katalysator (4) ist.

9. Katalysatorsystem nach einem der vorangegangenen Ansprüche, **dadurch gekennzeichnet, daß** der HC-Konvertierungsgrad durch Vergleich der bekannten als Diesel-Kraftstoff vor dem DeNOx-Katalysator (4) zudosierten HC-Menge und der gemessenen HC-Restkonzentration nach dem DeNOx-Katalysator (4) ermittelt wird, und daß auf der Grundlage von bevorzugt experimentell ermittelten Kennfeldern eine Verringerung eines HC-Konvertierungsgrades einer bestimmten Verringerung des CO-Konvertierungsgrades und/oder des NOx-Konvertierungsgrades zugeordnet wird.

10. Katalysatorsystem nach einem der vorangegangenen Ansprüche, **dadurch gekennzeichnet, daß** das Verhältnis zwischen der aus einem Kennfeld bekannten oder gespeicherten Zudosierung bei einem neuen DeNOx-Katalysator und einer aktuell gemessenen Zudosierung eines älteren DeNOx-Katalysators als Faktor ermittelt wird, und daß ein bestimmter Wert des größer werdenden Faktors als Schwellenwert, bevorzugt bei einem Wert von ca. 1,5, eine Alarmeinrichtung mit einer optischen und/oder akustischen Anzeige für einen Fahrzeugbenutzer aktiviert.

## Claims

1. A catalytic converter system for removing nitrogen from exhaust gases in the case of diesel engines, having a diesel engine (2), in the exhaust system (3) of which is arranged a catalytic converter, a device (5) for the metered addition of fuel, with which fuel can be meteredly added to the exhaust system (3) in front of the catalytic converter under the control of a metering control unit, and a sensor in the exhaust system (3) downstream of the catalytic converter, wherein
in the presence of hydrocarbons the catalytic converter is a deNOx catalytic converter (4),
the sensor downstream of the deNOx catalytic converter (4) is a hydrocarbon sensor (10),
the HC-sensor (10) is connected to the metering control unit as a metering regulator (7),
the HC-sensor (10) as an actual value sensor, the metering control unit as the metering regulator (7), the fuel metered addition device (5) as an adjusting member and the deNOx catalytic converter (4) as a regulating section form a closed regulating circuit, and
in accordance with a stored regulating algorithm diesel fuel as a reducing agent when the deNOx catalytic converter (4) is at operating temperature is meteredly added for Nox reduction in a regulated manner in dependence on the residual HC-concentration measured after the deNOx catalytic converter (4),
**characterised in that**
the HC-sensor (10) is electrically heated (12) to a given temperature and the value of the heating power required is used as a corresponding value for the operating temperature of the deNOx catalytic converter (4) and/or the exhaust gas temperature.

2. A catalytic converter system according to claim 1 **characterised in that** the fuel metered addition device meteredly adds the fuel to the exhaust system downstream of the diesel engine.

3. A catalytic converter system according to one of claims 1 and 2 **characterised in that** the residual hydrocarbon concentration when the deNOx catalytic converter (4) is at operating temperature is measured with the HC-sensor (10) downstream of the deNOx catalytic converter (4) for checking the catalytic converter function, wherein the checking operation includes an ageing check by ascertaining the degree of HC-conversion.

4. A catalytic converter system according to one of the preceding claims **characterised in that** the metered addition of fuel is effected in dependence on the detected exhaust gas temperature and/or rotary speed and/or load.

5. A catalytic converter system according to one of the preceding claims **characterised in that** the diesel engine (2) by virtue of controlled unburnt cylinder filling and/or the fuel metered addition device (5) delivers small HC-amounts in the form of diesel fuel meteredly added in the exhaust system in a manner controlled in respect of amount and time and the reduction thereof is measured inter alia for determining the operating temperature of the deNOx catalytic converter (4) as a criterion for starting the deNOx catalytic converter (4), with the HC-sensor (10).

6. A catalytic converter system according to one of the preceding claims **characterised in that** the catalytic converter stores at least one nitrogen oxide when λ > 1 and reduces it upon a reduction in the oxygen excess in the exhaust gas with the hydrocarbons.

7. A catalytic converter system according to one of claims 1 to 5 **characterised in that** with the simultaneous presence of hydrocarbons and oxygen the catalytic converter is a deNOx catalytic converter.

8. A catalytic converter system according to one of claims 1 to 6 **characterised in that** the catalytic converter is a platinum-bearing deNOx catalytic converter (4).

9. A catalytic converter system according to one of the preceding claims **characterised in that** the degree of HC-conversion is ascertained by comparison of the known HC-amount meteredly added in the form of diesel fuel in front of the deNOx catalytic converter (4) and the measured residual HC-concentration after the deNOx catalytic converter (4) and that on the basis of preferably experimentally ascertained performance characteristics a reduction in a degree of HC-conversion is associated with a given reduction in the degree of CO-conversion and/or the degree of Nox-conversion.

10. A catalytic converter system according to one of the preceding claims **characterised in that** the relationship between the metered addition which is stored or known from performance characteristics in the case of a new deNOx catalytic converter and a currently measured metered addition of an older deNOx catalytic converter is ascertained as a factor and that a given value of the factor which becomes greater activates an alarm device with an optical and/or acoustic display for a vehicle user, as a threshold value, preferably at a value of about 1.5.

## Revendications

1. Système catalytique pour la dénitruration des gaz d'échappement sur des moteurs diesel à combustion interne, avec un moteur diesel à combustion interne (2), dans la branche des gaz d'échappement (3) duquel est disposé un catalyseur, un dispositif d'addition dosée de carburant (5), avec lequel une unité de commande de dosage permet d'ajouter du carburant de façon contrôlée dans la branche des gaz d'échappement (3) en amont du catalyseur, et un capteur dans la branche des gaz d'échappement (3) en aval du catalyseur, sachant que
le catalyseur est un catalyseur à DeNO_{X} (4) en présence d'hydrocarbures,
le capteur en aval du catalyseur à DeNO_{X} (4) est un capteur d'hydrocarbures (10),
le capteur de HC (10) est raccordé à l'unité de commande de dosage en tant que régulateur de dosage (7),
le capteur de HC (10) en tant que capteur de valeur réelle, l'unité de commande de dosage en tant que régulateur de dosage (7), le dispositif d'addition dosée de carburant (5) en tant qu'actionneur et le catalyseur à DeNO_{X} (4) en tant que tronçon de réglage constituent un circuit de réglage fermé, et du carburant diesel en tant qu'agent réducteur est ajouté de façon dosée selon un algorithme de réglage mémorisé avec un catalyseur à DeNO_{X} (4) opérationnel pour réduire le NO_{X} réglé en fonction de la concentration résiduelle de HC mesurée après le catalyseur à DeNO_{X} (4),
**caractérisé**
**en ce que** le capteur de HC (10) est chauffé électriquement à une température déterminée (12) et la valeur de la puissance calorifique nécessaire est utilisée en tant que valeur appropriée pour la température de service du catalyseur à DeNO_{X} (4) et/ou la température des gaz brûlés.

2. Système catalytique selon la revendication 1, **caractérisé en ce que** le dispositif d'addition dosée de carburant ajoute le carburant de façon dosée après le moteur diesel à combustion interne dans la branche des gaz d'échappement.

3. Système catalytique selon l'une quelconque des revendications 1 ou 2, **caractérisé en ce que** la concentration résiduelle d'hydrocarbures est mesurée avec le capteur de HC (10) en aval du catalyseur à DeNO_{X} (4) le catalyseur à DeNO_{X} (4) étant à sa température de fonctionnement pour le contrôle du fonctionnement du catalyseur, le contrôle comprenant un contrôle du vieillissement par le calcul de degré de conversion de HC.

4. Système catalytique selon l'une quelconque des revendications précédentes, **caractérisé en ce que** l'addition dosée de carburant s'effectue en fonction de la température enregistrée des gaz brûlés et/ou du régime et/ou de la charge.

5. Système catalytique selon l'une quelconque des revendications précédentes, **caractérisé en ce que** le moteur diesel à combustion interne (2) fournit de faibles quantités de HC en tant que carburant diesel ajouté de façon dosée dans la branche des gaz d'échappement avec un contrôle en fonction de la quantité et du temps par la charge du cylindre non brûlée et contrôlée et/ou le dispositif d'addition dosée de carburant (5) et leur réduction est mesurée entre autres pour le calcul de la température de service du catalyseur à DeNO_{X} (4) comme critère pour le démarrage du catalyseur à DeNO_{X} (4) avec le capteur de HC (10).

6. Système catalytique selon l'une quelconque des revendications précédentes, **caractérisé en ce que** le catalyseur emmagasine au moins un oxyde d'azote pour λ > 1 et réduit les hydrocarbures dans le cas d'une réduction de l'excédent d'oxygène dans les gaz brûlés.

7. Système catalytique selon l'une quelconque des revendications 1 à 5, **caractérisé en ce que** le catalyseur est un catalyseur à DeNO_{X} avec la présence simultanée d'hydrocarbures et d'oxygène.

8. Système catalytique selon l'une quelconque des revendications 1 à 6, **caractérisé en ce que** le catalyseur est un catalyseur à DeNO_{X} (4) platinifère.

9. Système catalytique selon l'une quelconque des revendications précédentes, **caractérisé en ce que** le degré de conversion de HC est calculé par la comparaison de la quantité de HC connue et ajoutée de façon dosée en tant que carburant diesel avant le catalyseur à DeNO_{X} (4) et de la concentration résiduelle de HC mesurée après le catalyseur à DeNO_{X} (4), et **en ce que**, sur la base de diagrammes caractéristiques calculés de préférence de façon expérimentale, une réduction d'un degré de conversion de HC est attribuée à une réduction définie du degré de conversion de CO et/ou du degré de conversion de NO_{X}.

10. Système catalytique selon l'une quelconque des revendications précédentes, **caractérisé en ce que** le rapport entre l'addition dosée connue ou mémorisée à partir d'un diagramme caractéristique dans le cas d'un nouveau catalyseur à DeNO_{X} et une addition dosée mesurée actuellement d'un catalyseur à DeNO_{X} plus ancien est calculé en tant que facteur et qu'une valeur définie du facteur augmentant en tant que valeur seuil, de préférence avec une valeur d'environ 1,5, active un système d'alarme équipé d'un affichage optique et/ou acoustique pour un utilisateur de véhicule.
